# EUROPEAN PATENT SPECIFICATION

(11) **EP 0 813 002 B1**
(45) Date of publication and mention of the grant of the patent: **04.12.2002**
(21) Application number: 97108505.5
(22) Date of filing: 27.05.1997
(51) Int. Cl.: F16H 59/04, F16H 61/36, F16C 1/14

(54) **A system for driving the control shaft of a motorcar mechanical gearbox**
Antriebssystem für die Steuerachse eines mechanischen Kraftfahrzeuggetriebes
Système d'entraînement de l'arbre de commande d'une boîte de vitesse mécanique pour véhicules automobiles

(30) Priority: 12.06.1996 IT TO960508
(43) Date of publication of application: 17.12.1997
(73) Proprietor: FIAT AUTO S.p.A., 10135 Torino (IT)
(72) Inventor: Lo Conte, Fulvio, 10126 Torino (IT); De Francesco, Gaetano, 10092 Beinasco (Torino) (IT); Giolitti, Elio, 10137 Torino (IT)
(74) Representative: Di Francesco, Gianni

(56) References cited:
- GB-A- 538 110
- GB-A- 1 063 875
- US-A- 1 897 216
- US-A- 3 000 231
- US-A- 5 207 116
- PATENT ABSTRACTS OF JAPAN vol. 1995, no. 10, 30 November 1995 (1995-11-30) & JP 07 180719 A (CHUO SPRING CO LTD), 18 July 1995 (1995-07-18)

## Description

The present invention refers to a driving system for the control shaft of a motorcar mechanical gearbox; more particularly, the invention relates to a system of the above kind utilising flexible push-pull cables for driving said shaft by means of the gear lever.

A driving system according to the preamble of claim 1 is known from document GB 538 110 A.

With present systems, the flexible cables are generally arranged perpendicular to the control shaft. Therefore, either translation of the shaft along its axis and rotation of the shaft for accomplishing gear selection and engagement motions, respectively, are attained through transmission members.

Besides involving high manufacturing and assembly costs, said transmission members have the drawback of reducing efficiency of the whole control system and that of increasing clearance, whereby the gear shifting manoeuvre becomes less immediate and precise.

A second drawback with such known systems lies in that the rate of vibration transmitted to the inside of the passenger's cabin is increased, which reduces comfort.

It is an object of the present invention to provide a driving system for the gearbox control shaft capable of overcoming the above discussed drawbacks.

To this end, the present invention provides a system for driving the control shaft of a motorcar mechanical gearbox as claimed in claim 1.

In a preferred embodiment of the present invention, the junction between the end portion of the flexible cable to the end portion of the gearbox control shaft is attained by means of a snap connection.

For a better understanding of the present invention, reference is made to the following detailed description of an exemplary embodiment considered in combination with the accompanying drawings, in which:
- FIG. 1: is a partial schematical view of the driving system in accordance with the present invention;
- FIGS. 2 and 3: are a front and partially sectional view, respectively, of a detail of FIG. 1 to an enlarged scale; and
- FIG. 4: is a cross sectional view taken along line II-II of FIG. 2.

With reference to the drawings, numeral 1 designates a gearbox case, schematically illustrated in phantom line, in which there is inserted the gearbox control shaft 2. Control shaft 2 serves to select and engage the single gears as selected by the driver moving the gear lever (not shown). As known, gear selection is accomplished by translating the control shaft 2 along its axis in one of the two directions indicated by arrows H, while engagement of the selected gear is attained by rotating the shaft about its axis in one of the two directions of rotation indicated by arrows F.

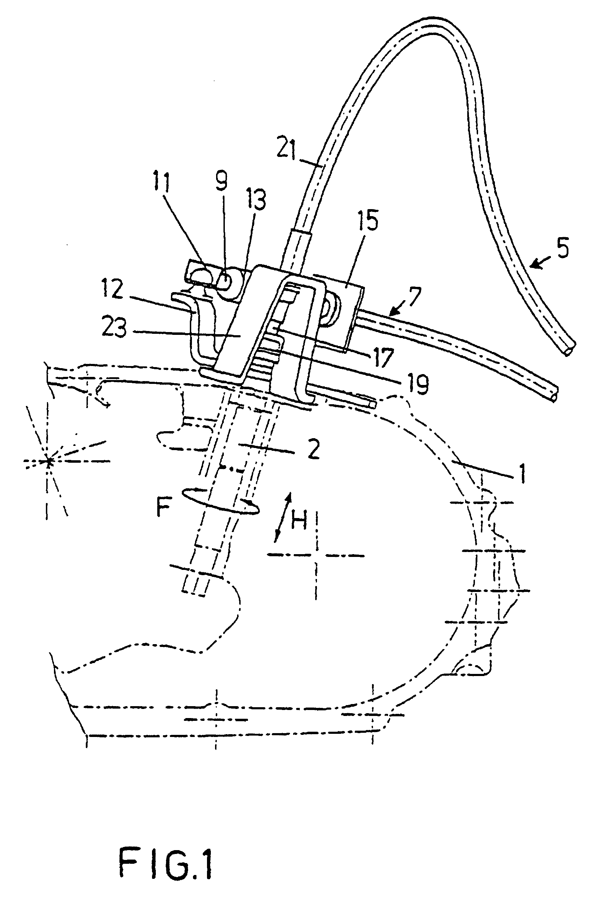

In FIG. 1 there are shown two flexible cables 5 and 7 for controlling gear selection and engagement, respectively. The end portions of cables 5 and 7 not being illustrated are connected to the transmission members of the gear lever. The cable 7 for engaging the selected gear has its other end connected to a transmission member 12 through an articulated joint 11. The transmission member 12 is adapted, in a manner known per se, to rotate the shaft 2 when actuated through said cable 7. The sheathing 13 of cable 7 is provided with a contrasting point 15 normally fixed to the gear box 1.

The cable 7 reaches the shaft 2 along a direction perpendicular to the axis of said shaft.

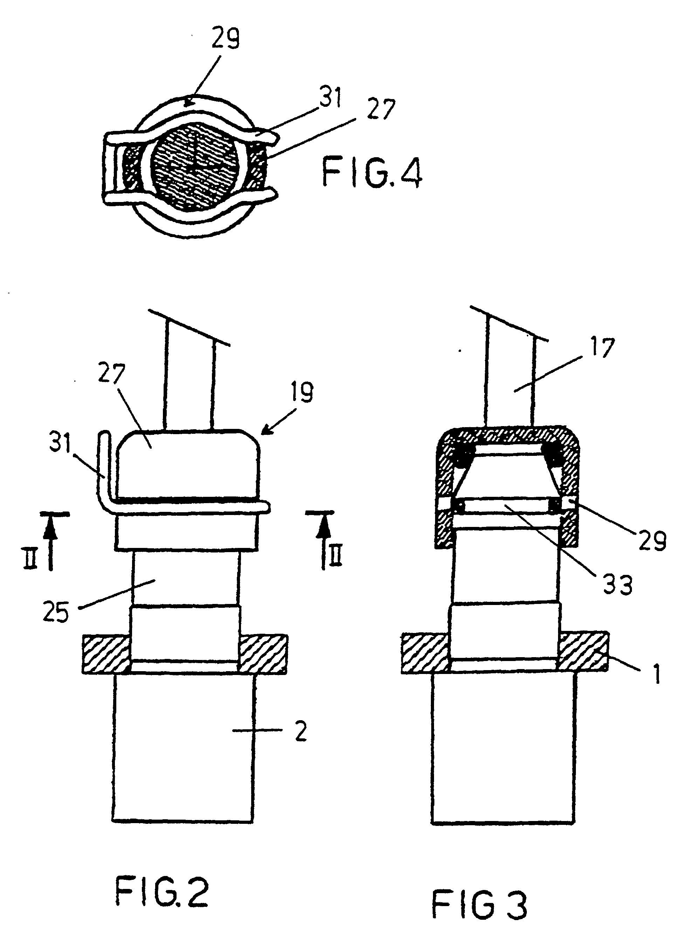

The cable 5 for actuating a translation gear selection motion reaches the shaft 2 in a substantially coaxial position, and is connected thereto at its end portion 17 by means of a snap-fit connection, shown in further detail in FIGS. 2 to 4. The sheathing 21 of cable 5 uses a reverse U shaped bracket 23 secured to the gear box 1 as a contrasting point.

However, it should be noticed that, as a function of the construction of the inner controls of the gearbox, the translation movement of shaft 2, that in this example provides gear selection, may otherwise be used for the gear engagement operation.

The snap-fit connection 19 at the outer end 25 of driving cable 2 consists of a guard 27, preferably made of metal and provided with side splines 29 in which a clip 31 is inserted. The guard 27 is secured in known manner to the end portion 17 of cable 5, whilst the clip 31, positioned within the spline 29, is adapted to snap-fit into a groove 33 formed in the end portion 25 so as to transmit the rotational motion of cable 5 to shaft 2.

The above arrangement avoid to have to provide a further transmission member on the gear box, which would cause the above discussed inconveniences.

## Claims

1. A system for driving the control shaft (2) of a motorcar mechanical gearbox, of the kind utilising two flexible push-pull cables (5, 7) associated to transmission members for transmitting control movements from the gear lever to said control shaft (2) so as to translate and rotate said shaft along and about its axis, in order to select and engage the single gears, **characterised in that** the flexible cable (5) for translating said control shaft (2) having the function of selecting or engaging the desired gear, according to the internal system of the gearbox, is directly connected to said shaft in a coaxial manner.

2. A system as claimed in claim 1, **characterised in that** the junction between the end portion (17) of the flexible cable (5) to the end portion (25) of the gearbox control shaft (2) is attained by means of a snap connection (19).

3. A system as claimed in claim 2, **characterised in that** said snap connection (19) consists of a guard (27), preferably made of metal, and provided with side splines (29) in which a clip (31) is inserted, said clip being adapted to snap-fit into a groove (33) formed in said end portion (25) of said shaft (2).

## Patentansprüche

1. System zum Antreiben der Schaltwelle (2) eines mechanischen Kraftfahrzeuggetriebes, bei dem zwei biegsame Druck-Zug-Kabel (5, 7) eingesetzt sind, die Übertragungselementen zum Übertragen von Steuerbewegungen vom Schalthebel auf die Schaltwelle (2) zugeordnet sind, um so die Welle in ihrer Achsrichtung zu verschieben und um ihre Achse zu drehen, um so die einzelnen Gänge zu wählen und zu schalten, **dadurch gekennzeichnet, dass** das biegsame Kabel (5) zum Verschieben der Schaltwelle (2), was gemäß dem Innensystem des Getriebes zum Wählen oder Schalten des gewünschten Ganges dient, direkt mit der Welle in koaxialer Weise verbunden ist.

2. System nach Anspruch 1, **dadurch gekennzeichnet, dass** die Verbindung zwischen dem Endteil (17) des biegsamen Kabels (5) mit dem Endteil (25) der Getriebeschaltwelle (2) mittels einer Schnappverbindung (19) erzielt ist.

3. System nach Anspruch 2, **dadurch gekennzeichnet, dass** die Schnappverbindung (19) aus einer vorzugsweise aus Metall hergestellten Führung (27) besteht, die mit seitlichen Nuten (29) versehen ist, in die ein Clip (31) eingesetzt ist, wobei der Clip zum Einschnappen in eine Nut (33) angepasst ist, die in dem Endteil (25) der Welle (2) ausgebildet ist.

## Revendications

1. Système d'entraînement de l'arbre de commande (2) d'une boîte de vitesses mécanique pour véhicules automobiles, du type utilisant deux câbles push-pull flexibles (5,7) associés à des éléments de transmission pour transmettre des mouvements de contrôle du levier de vitesse audit arbre de commande (2) afin de traduire et de tourner ledit arbre le long de son axe et sur son axe, dans le but de sélectionner et de mettre en prise l'embrayage simple, **caractérisé en ce que** le câble flexible (5) pour traduire ledit arbre de commande (2) ayant la fonction de sélectionner ou de mettre en prise la vitesse souhaitée, selon le système interne de l'arbre de commande de la boîte de vitesses, est directement connecté audit arbre de façon coaxiale.

2. Système selon la revendication 1, **caractérisé en ce que** la jonction entre la partie d'extrémité (17) du câble flexible (5) de la partie d'extrémité (25) de l'arbre de commande du levier de vitesses (2) est obtenue au moyen d'une connexion à encliquetage (19).

3. Système selon la revendication 2, **caractérisé en ce que** ladite connexion à encliquetage (19) comprend un dispositif de sûreté (27), de préférence fabriqué en métal, et formé de cannelures latérales (29) dans lequel un clip (31) est inséré, ledit clip étant adapté pour s'ajuster par encliquetage dans une rainure (33) formée dans la partie d'extrémité (25) dudit arbre (2).
